# EUROPEAN PATENT SPECIFICATION

(11) **EP 1 766 875 B1**
(45) Date of publication and mention of the grant of the patent: **03.04.2013**
(21) Application number: 05757501.1
(22) Date of filing: 10.06.2005
(51) Int. Cl.: H04W 74/02, H04W 72/12

(54) **LEGACY DEVICE FAIRNESS APPARATUS, SYSTEMS, AND METHODS IN MIXED-GENERATION NETWORKS**
LEGACY-EINRICHTUNG-FAIRNESS-VORRICHTUNG, SYSTEME UND VERFAHREN IN NETZWERKEN GEMISCHTER GENERATIONEN
APPAREILS, SYSTEMES ET PROCEDES D'EQUITE POUR DISPOSITIFS EXISTANTS DANS DES RESEAUX DE GENERATION MIXTE

(30) Priority: 28.06.2004 US 880147
(43) Date of publication of application: 28.03.2007
(73) Proprietor: Intel Corporation, Santa Clara, CA 95052 (US)
(72) Inventor: STEPHENS, Adrian, Cambridge CB4 8TA (GB)
(74) Representative: Dunlop, Hugh Christopher
(86) International application number: PCT/US2005/020552
(87) International publication number: WO 2006/011964

(56) References cited:
- WO-A-03/007550
- WO-A-2005/018180
- US-A1- 2002 048 368
- US-A1- 2002 184 389
- US-A1- 2004 242 252

## Description

### Priority Claim

This application claims the benefit of priority to U.S. Provisional Patent Application Serial No. 60/553,420, entitled "Method and Apparatus for Fair Legacy Protection," filed on March 12, 2004.

### Technical Field

Various embodiments described herein relate to communications generally, including apparatus, systems, and methods used to transmit and receive information via wireless networks.

### Background Information

High-throughput (HT) methods in wireless communications may require modification to existing packet and channel formats. Newer devices may operate to support both HT and legacy technologies by transmitting header information intelligible to both. Such information may beneficially cause a legacy device to delay transmission and thereby avoid spectral conflict with an HT device. However, the legacy device may fail to completely interpret a packet received from the HT device. Such failure may detrimentally cause the legacy device to perform a longer back-off than that of HT devices, resulting in a fundamental unfairness in legacy device access to available bandwidth.
US 2002/0184389A1 relates to interference suppression methods for 802.11 wherein a second source station on a wireless local area network, that does not practice the enhanced 802.11 e standard, is prevented from starting transmission on a medium whilst a first source station is transmitting on that medium.

### Brief Description of the Drawings

FIG. 1 comprises a timing diagram according to various embodiments of the invention.

FIG. 2 is a block diagram of an apparatus and a system according to various embodiments of the invention.

FIG. 3 is a flow diagram illustrating several methods according to various embodiments of the invention.

FIG. 4 is a block diagram of an article according to various embodiments of the invention.

### Detailed Description

Various embodiments disclosed herein address a fundamental unfairness that may occur in mixed-generation wireless networks during physical layer convergence procedure header spoofing operations. "Physical layer convergence procedure header spoofing operations" may include setting a duration value in a header portion of an HT wireless packet to a value the same as or different from an actual duration of the HT packet, to protect one or more HT packets from radio frequency interference by the legacy device. "Mixed-generation wireless networks" may include legacy Institute of Electrical and Electronics Engineers (IEEE) 802.11 systems and (for example) IEEE 802.11TGn systems, known to those skilled in the art, and sometimes referred to as "high-throughput" networks.

Physical layer convergence procedure header spoofing may begin when a legacy device receives an HT packet with a physical layer convergence procedure header intelligible to the legacy device. The legacy device may read a rate and a length from the header, calculate a packet duration, and perform a cyclical redundancy code integrity check on the received packet upon expiration of the calculated packet duration. Although the integrity check may fail, the spoofing operation may provide a mode whereby legacy devices delay transmitting upon receipt of the HT packets and thus avoid interfering with such packets. For more information regarding IEEE 802.11 standards, please refer to "IEEE Standards for Information Technology -- Telecommunications and Information Exchange between Systems -- Local and Metropolitan Area Network -- Specific Requirements -- Part 11: Wireless LAN Medium Access Control (MAC) and Physical Layer (PHY), ISO/IEC 8802-11: 1999" and related amendments.

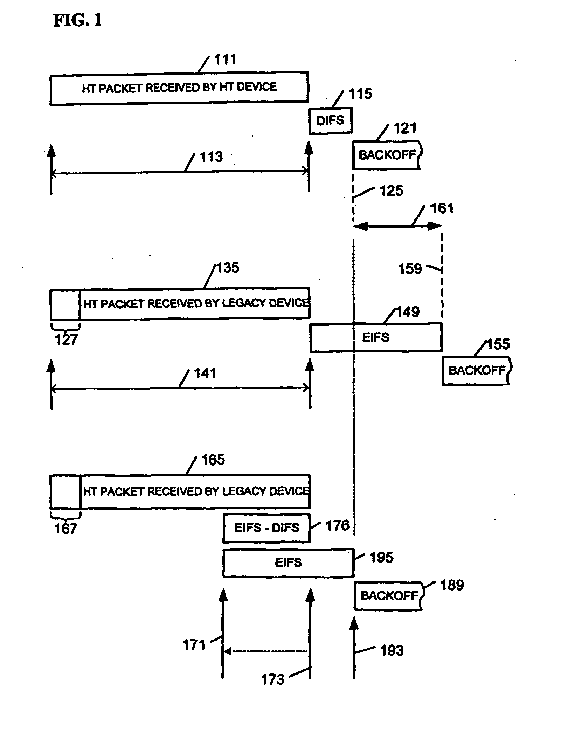

FIG. 1 comprises timing diagrams according to various embodiments of the invention. In these diagrams, various embodiments are shown for simplicity, and they should not be used to limit any of the embodiments disclosed herein. For example, a modified duration parameter may be calculated to be a function of a distributed interframe space (DIFS) period and an extended interframe space period (EIFS). However, various functions of other variables may also be used to calculate the modified duration parameter disclosed herein.

Referring now to FIG. 1, assume that an HT communications device receives an HT packet III during a time 113. The HT device may wait a DIFS period 115 before initiating backoff 121 at time 125.

In FIG. 1, it can be seen that a legacy device may read a header 127 from an HT packet 135. After a packet duration 141 encoded into the header 127 has elapsed, the legacy device may perform a cyclical redundancy code (CRC) integrity check on the contents of the packet 135 as received. The integrity check may fail, since portions of the HT packet 135 may be unreadable by the legacy device.

Upon CRC check failure, the legacy device may wait an EIFS period 149 before instituting a backoff 155 at a time 159, in order to avoid interference. The difference between the wait period 115 associated with an HT device and the wait period 149 associated with a legacy receiving device may represent a fundamental unfairness 161 to the legacy receiving device in media access.

In some embodiments, an HT packet 165 may be transmitted with a header 167 including a modified duration parameter. The modified duration parameter may cause a legacy device to perform a CRC integrity check on a contents of the packet 165 thus received at a spoofed end-of-packet time 171 prior to a time 173 corresponding to an actual end of a transmission of the packet 165. In some embodiments, the time 171 may be selected to be equal to the time 173 less a period 176 of an EIFS minus a period of a DIFS. Other embodiments may select a different time 171. Upon packet integrity check failure, the legacy device may enter a backoff 189 at a time 193, following an EIFS period 195 which may be substantially aligned with the time 125 at which an HT device may enter backoff 121. As one skilled in the art can see from FIG. 1, this implementation of a modified duration parameter may resolve the problem of a fundamental unfairness in media access.

Some embodiments may implement the technique of FIG. 1 to protect a plurality of sequentially transmitted HT packets, wherein duration 141 may correspond to a sum of all durations in the plurality, plus the sum of all inter-packet space periods. Modifying a packet duration parameter associated with the plurality of sequentially transmitted HT packets may cause a legacy device to select a time 171 to be equal to a time 173 less a period 176 of an EIFS 195 minus a period of a DIFS 115. This procedure may result in HT and legacy devices entering backoff at substantially the same time, and thus result in greater fairness in media access in a mixed-generation environment

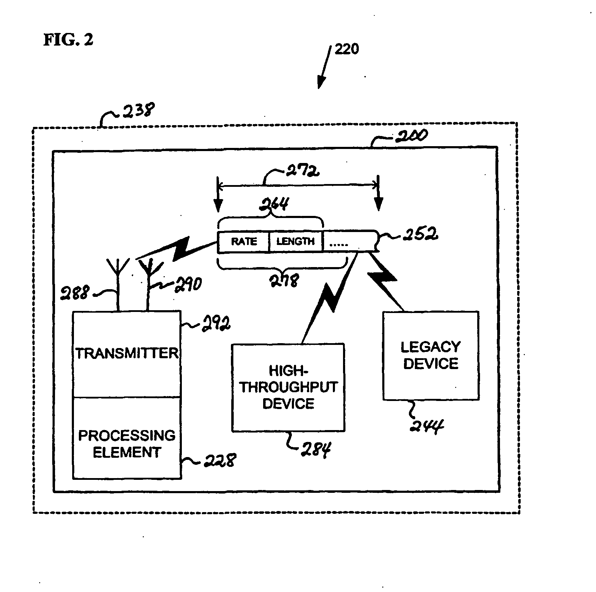

FIG. 2 is a block diagram of an apparatus 200 and a system 220 according to various embodiments of the invention. The apparatus 200 may include a processing element 228 to transmit, within a mixed-generation network 238 including a legacy device 244, at least one packet 252 to the legacy device 244, wherein the at least one packet 252 includes a modified duration parameter. In some embodiments of the apparatus 200, a value of the modified duration parameter may be less than a first duration 272 of the at least one packet 252. Some embodiments of the apparatus 200 may set a value of the modified duration parameter to the first duration 272 of the at least one packet 252, less a period of an EIFS, minus a period of a DIFS.

In some embodiments of the apparatus 200, the modified duration parameter may be transmitted using rate and/or length values 264 included in a legacy-compatible physical layer header 278. In some embodiments of the apparatus 200, the mixed-generation network 238 may include an HT device 284 operating according to an IEEE 802.11TGn protocol. Other embodiments may be realized.

For example, a system 220 may include an apparatus 200, as well as an energy conduit 288. The energy conduit 288 may be selected from one or more of an omnidirectional antenna, a patch antenna, a dipole antenna, a unidirectional antenna, an infra-red transmitter, an infra-red receiver, photo-emitters and receptors, and charge-coupled devices, among others. Some embodiments of the system 220 may include at least one additional antenna 290 coupled to a transmitter 292.

The system 220 may, in some embodiments, include a legacy device 244 to receive a modified duration parameter and an HT device 284 to transmit the modified duration parameter. Some embodiments of the system 220 may include an antenna 290 and a transmitter 292 coupled to the antenna 290 to transmit, within a mixed-generation network 238 including the legacy device 244, at least one packet 252 to the legacy device 244, wherein the at least one packet 252 includes a modified duration parameter. In some embodiments of the system 220, a value of the modified duration parameter may be less than a first duration 272 of the at least one packet 252. In some embodiments, the modi fied duration parameter may be set to a value of the first duration 272 of the at least one packet 252, less a period of an EIFS minus a period of a DIFS. In some embodiments of the system 220, the modified duration parameter may be encoded according to an IEEE 802.11 standard.

The HT packet 111, time 113, DIFS period 115, backoff 121, time 125, header 127, HT packet 135, packet duration 141, header 127, EIFS period 149, backoff 155, time 159, wait period 115, packet 165, header 167, time 171, time 173, backoff 189, time 193, EIFS period 195, apparatus 200, system 220, processing element 228, mixed-generation network 238, legacy device 244, packet 252, first duration 272, rate and/or length values 264, legacy-compatible physical layer header 278, HT device 284, energy conduit 288, antenna 290, and transmitter 292 may all be characterized as "modules" herein. Such modules may include hardware circuitry, and/or a processor and/or memory circuits, software program modules and objects, and/or firmware, and combinations thereof, as desired by the architect of the apparatus 200 and system 220, and as appropriate for particular implementations of various embodiments. For example, such modules may be included in a system operation simulation package, such as a software electrical signal simulation package, a power usage and distribution simulation package, a capacitance-inductance simulation package, a power/heat dissipation simulation package, a signal transmission-reception simulation package, and/or a combination of software and hardware used to simulate the operation of various potential embodiments.

It should also be understood that the apparatus and systems of various embodiments can be used in applications other than for human-computer interface devices, and thus, various embodiments are not to be so limited. The illustrations of apparatus 200 and system 220 are intended to provide a general understanding of the structure of various embodiments, and they are not intended to serve as a complete description of all the elements and features of apparatus and systems that might make use of the structures described herein.

Applications that may include the novel apparatus and systems of various embodiments include electronic circuitry used in high-speed computers, communication and signal processing circuitry, modems, processor modules, embedded processors, data switches, and application-specific modules, including multilayer, multi-chip modules. Such apparatus and systems may further be included as sub-components within a variety of electronic systems, such as televisions, cellular telephones, personal computers, workstations, radios, video players, vehicles, and others. Some embodiments include a number of methods.

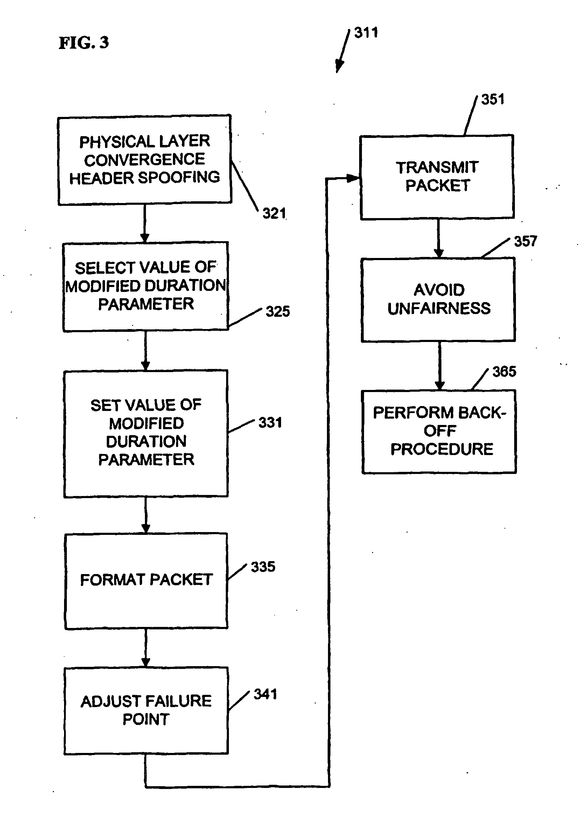

FIG. 3 is a flow diagram illustrating several methods 311 according to various embodiments of the invention. For example, a method 311 may (optionally) begin at block 321 with using physical layer convergence procedure header spoofing to transmit a modified duration parameter. The method 311 at block 321 may include operating a high-throughput device according to a protocol defined by an Institute of Electrical and Electronics Engineers amendment 802.1 In to an Institute of Electrical and Electronics Engineers 802.11 standard.

The method 311 may continue with selecting the modified duration parameter to avoid an unfairness in media access between a legacy device and another device at block 325. It should be noted that the modified duration parameter of method 311 may be associated with a plurality of sequentially transmitted HT packets. The method 311 may include setting the modified duration parameter by modifying at least one of a length field and a rate field at block 331. It should be noted that the modified duration parameter of block 331 may be set to less than a duration of at least one packet, and/or a value of the duration of the at least one packet, less a period of an EIFS minus a period of a DIFS, among others.

Note that the method 311 may include formatting at least one packet according to an IEEE 802.11 standard at block 335. The method 311 may include adjusting a point in time of cyclical redundancy code failure determination associated with the at least one packet at block 341. The method 311 may include transmitting, within a mixed-generation network including a legacy device, at least one packet to the legacy device, wherein the at least one packet includes a modified duration parameter at block 351.

The method 311 may operate to avoid unfairness in media access between the legacy device and another device at block 357. The method 311 may (optionally) terminate by performing a carrier sense multiple access collision avoidance backoff procedure at block 365.

It should be noted that the methods described herein do not have to be executed in the order described, or in any particular order. Moreover, various activities described with respect to the methods identified herein can be executed in serial or parallel fashion. Information, including parameters, commands, operands, and other data, can be sent and received in the form of one or more carrier waves.

Upon reading and comprehending the content of this disclosure, one of ordinary skill in the art will understand the manner in which a software program can be launched from a computer-readable medium in a computer-based system to execute the functions defined in the software program. One of ordinary skill in the art will further understand the various programming languages that may be employed to create one or more software programs designed to implement and perform the methods disclosed herein. The programs may be structured in an object-orientated format using an object-oriented language such as Java or C++. Alternatively, the programs can be structured in a procedure-orientated format using a procedural language, such as assembly or C. The software components may communicate using any of a number of mechanisms well known to those skilled in the art, such as application program interfaces or interprocess communication techniques, including remote procedure calls. The teachings of various embodiments are not limited to any particular programming language or environment. Thus, other embodiments may be realized.

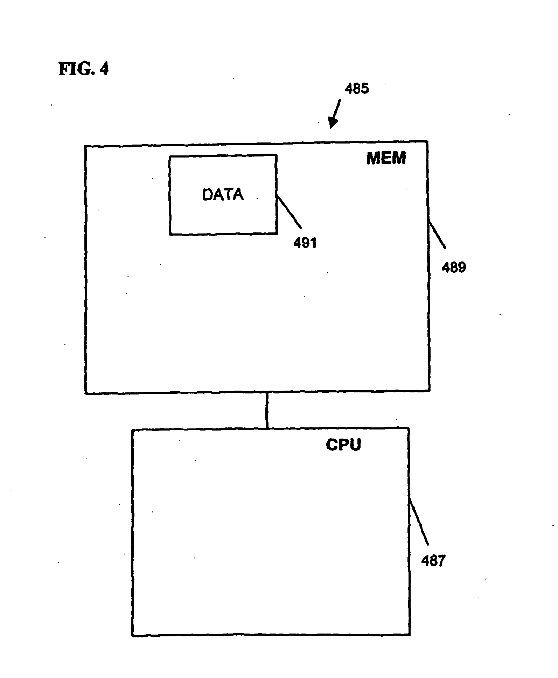

For example, FIG. 4 is a block diagram of an article 485 according to various embodiments of the invention. Examples of such embodiments may comprise a computer, a memory system, a magnetic or optical disk, some other storage device, and/or any type of electronic device or system. The article 485 may include a processor 487 coupled to a machine-accessible medium such as a memory 489 (e.g., a memory including an electrical, optical, or electromagnetic conductor) having associated information 491 (e.g., computer program instructions and/or data), which, when accessed, results in a machine (e.g., the processor 487) performing such actions as transmitting, within a mixed-generation network including a legacy device, at least one packet to the legacy device, wherein the at least one packet includes a modified duration parameter.

Other activities may include setting the modified duration parameter to a value of a duration of the at least one packet, less a period of an EIFS minus a period of a DIFS. Further activities may include selecting the modified duration parameter to avoid unfairness in media access between the legacy device and another device. Some activities may include selecting the other device to be an HT device operating according to an IEEE 802.11 TGn protocol.

Implementing the apparatus, systems, and methods disclosed herein may decrease spectral interference in a mixed-generation environment, including for example, between legacy and HT devices.

The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method, comprising:
transmitting, within a mixed-generation network (238) including a legacy device (244) operating according to an Institute of Electrical and Electronic Engineers 802.11 protocol, at least one packet (252) to the legacy device (244), wherein the at least one packet (252) includes a modified duration parameter; **characterised in that**
said network (238) includes a high throughput device (284) operating according to an Institute of Electrical and Electronics Engineers 802.11 TGn protocol; and
wherein the modified duration parameter is associated with a plurality of sequentially transmitted high-throughput packets (165).

2. The method of claim 1, wherein a value of the modified duration parameter is less than a first duration (272) of the at least one packet (252).

3. The method of claim 2, including:
setting the modified duration parameter to a value substantially equal to the first duration (272), less a period of an extended interframe space minus a period of a distributed interframe space.

4. The method of claim 1, including:
using physical layer convergence procedure header spoofing to transmit the modified duration parameter.

5. The method of claim 1, including:
adjusting a point in time of cyclical redundancy code failure determination associated with the at least one packet.

6. The method of claim 1, including:
avoiding unfairness in media access between the legacy device and the high-throughput device (284).

7. The method of claim 1, including:
setting the modified duration parameter by modifying at least one of a length field and a rate field.

8. The method of claim 1, including:
formatting the at least one packet according to an Institute of Electrical and Electronic Engineers 802.11 standard.

9. The method of claim 1, further including:
performing a carrier sense multiple access collision avoidance backoff procedure.

10. A computer-implemented storage medium having instructions stored thereupon, wherein when said instructions are carried out, results in a machine performing the following method steps:
transmitting, within a mixed-generation network (238) including a legacy device (244) operating according to an Institute of Electrical and Electronic Engineers 802.11 protocol, at least one packet (252) to the legacy device (244), wherein the at least one packet (252) includes a modified duration parameter; **characterised in that**
said network (238) includes a high thoughput device (284) operating according to an Institute of Electrical and Electronics Engineers 802.11TGn protocol; and
wherein the modified duration parameter is associated with a plurality of sequentially transmitted high-throughput packets (165).

11. The storage medium of claim 10, wherein the modified duration parameter is selected to avoid unfairness in media access between the legacy device and the high-throughput device (284).

12. The storage medium of claim 10, wherein the at least one packet (252) includes a physical layer convergence procedure header.

13. An apparatus, including:
a processing element (228) for transmitting, within a mixed-generation network (238) including a legacy device (244) operating according to an Institute of Electrical and Electronic Engineers 802.11 protocol, at least one packet (252) to the legacy device (244), wherein the at least one packet (252) includes a modified duration parameter; **characterised in that**
said network (238) includes a high throughput device (284) operating according to an Institute of Electrical and Electronics Engineers 802.11TGn protocol; and
wherein a value of the modified duration parameter is less than a first duration (272) of the at least one packet (252).

14. The apparatus of claim 13, wherein the modified duration parameter is set to a value of the first duration of the at least one packet (252), less a period of an extended interframe space minus a period of a distributed interframe space.

15. The apparatus of claim 13, wherein the modified duration parameter is transmitted using rate and length values included in a legacy-compatible physical layer header.

## Patentansprüche

1. Verfahren, das Folgendes umfasst:
Übertragen, innerhalb eines Mehrgenerationen-Netzwerks (238), das ein Legacy-Gerät (244) enthält, das gemäß einem Institute of Electrical and Electronic Engineers 802.11-Protokoll arbeitet, mindestens eines Paketes (252) an das Legacy-Gerät (244), wobei das mindestens eine Paket (252) einen modifizierten Zeitdauerparameter enthält; **dadurch gekennzeichnet, dass**
das Netzwerk (238) ein durchsatzstarkes Gerät (284) enthält, das gemäß einem Institute of Electrical and Electronic Engineers-802.11TGn-Protokoll arbeitet; und
wobei der modifizierte Zeitdauerparameter mehreren der Reihe nach gesendeten durchsatzintensiven Paketen (165) zugeordnet ist.

2. verfahren nach Anspruch 1, wobei ein Wert des modifizierten Zeitdauerparameters kleiner ist als eine erste Dauer (272) des mindestens einen Paketes (252).

3. Verfahren nach Anspruch 2, das Folgendes enthält:
Setzen des modifizierten Zeitdauerparameters auf einen Wert im Wesentlichen gleich der ersten Dauer (272), abzüglich eines Zeitraums eines erweiterten Interframe-Raumes minus eines Zeitraums eines verteilten Interframe-Raumes.

4. Verfahren nach Anspruch 1, das Folgendes enthält:
Verwenden eines Physical Layer Convergence Procedure Teilschicht (PCLP)-Header-Spoofing zum Senden des modifizierten Zeitdauerparameters.

5. Verfahren nach Anspruch 1, das Folgendes enthält:
Justieren eines Zeitpunktes einer zyklischen Redundanzcodefehler-Bestimmung, die dem mindestens einen Paket zugeordnet ist.

6. Verfahren nach Anspruch 1, das Folgendes enthält:
Vermeidet einer Ungleichbehandlung beim Medienzugang zwischen dem Legacy-Gerät und dem durchsatzintensiven Gerät (284).

7. Verfahren nach Anspruch 1, das Folgendes enthält:
Setzen des modifizierten Zeitdauerparameters durch Modifizieren mindestens eines Längenfeldes und eines Ratenfeldes.

8. Verfahren nach Anspruch 1, das Folgendes enthält:
Formatieren des mindestens einen Paketes gemäß einem Institute of Electrical and Electronic Engineers-802.11-Standard.

9. Verfahren nach Anspruch 1, das des Weiteren Folgendes enthält:
Ausführen eines Carrier Sense Multiple Access/Collision Avoidance (CSMA/CA, Mehrfachzugriff mit Trägerprüfung und Kollisionsvermeidung) Backoff-Verfahrens.

10. Computerimplementiertes Speichermedium, auf dem Instruktionen gespeichert sind, wobei das Ausführen der Instruktionen dazu führt, dass eine Maschine die folgenden Verfahrensschritte ausführt:
Übertragen, innerhalb eines Mehrgenerationen-Netzwerks (238), das ein Legacy-Gerät (244) enthält, das gemäß einem Institute of Electrical and Electronic Engineers 802.11-Protokoll arbeitet, mindestens eines Paketes (252) an das Legacy-Gerät (244), wobei das mindestens eine Paket (252) einen modifizierten Zeitdauerparameter enthält; **dadurch gekennzeichnet, dass**
das Netzwerk (238) ein durchsatzstarkes Gerät (284) enthält, das gemäß einem Institute of Electrical and Electronic Engineers-802.11TGn-Protokoll arbeitet; und
wobei der modifizierte Zeitdauerparameter mehreren der Reihe nach gesendeten durchsatzintensiven Paketen (165) zugeordnet ist.

11. Speichermedium nach Anspruch 10, wobei der modifizierte Zeitdauerparameter so ausgewählt wird, dass eine Ungleichbehandlung beim Medienzugang zwischen dem Legacy-Gerät und dem durchsatzintensiven Gerät (284) vermieden wird.

12. Speichermedium nach Anspruch 10, wobei das mindestens eine Paket (252) einen Physical Layer Convergence Procedure (PCLP)-Header enthält.

13. Vorrichtung, die Folgendes enthält:
ein Verarbeitungselement (228) zum Übertragen, innerhalb eines Mehrgenerationen-Netzwerks (238), das ein Legacy-Gerät (244) enthält, das gemäß einem Institute of Electrical and Electronic Engineers 802.11-Protokoll arbeitet, mindestens eines Paketes (252) an das Legacy-Gerät (244), wobei das mindestens eine Paket (252) einen modifizierten Zeitdauerparameter enthält; **dadurch gekennzeichnet, dass**
das Netzwerk (238) ein durchsatzstarkes Gerät (284) enthält, das gemäß einem Institute of Electrical and Electronic Engineers-802.11TGn-Protokoll arbeitet; und
wobei ein wert des modifizierten Zeitdauerparameters kleiner ist als eine erste Dauer (272) des mindestens einen Paketes (252).

14. Vorrichtung nach Anspruch 13, wobei der modifizierte Zeitdauerparameter auf einen wert der ersten Dauer des mindestens einen Paketes (252), abzüglich eines Zeitraums eines erweiterten Interframe-Raumes minus eines Zeitraum eines verteilten Interframe-Raumes, gesetzt wird.

15. Vorrichtung nach Anspruch 13, wobei der modifizierte Zeitdauerparameter unter Verwendung von Raten- und Längenwerten gesendet wird, die in einem Legacykompatiblen Bitübertragungsschicht-Header enthalten sind.

## Revendications

1. Procédé, comprenant :
la transmission, dans un réseau de génération mixte (238) comprenant un dispositif hérité (244) fonctionnant selon un protocole 802.11 de l'Institut des ingénieurs électriciens et électroniciens, d'au moins un paquet (252) au dispositif hérité (244), dans lequel ledit au moins un paquet (252) comprend un paramètre de durée modifié ; **caractérisé en ce que** :
ledit réseau (238) inclut un dispositif à haut débit (284) fonctionnant selon un protocole 802.11TGn de l'Institut des ingénieurs électriciens et électroniciens ; et
dans lequel le paramètre de durée modifé est associé à une pluralité de paquets à haut débit transmis séquentiellement (165).

2. Procédé selon la revendication 1, dans lequel une valeur du paramètre de durée modifié est inférieure à une première durée (272) dudit au moins un paquet (252).

3. Procédé selon la revendication 2, comprenant :
la définition du paramètre de durée modifié sur une valeur sensiblement égale à la première durée (272), de laquelle est déduite une période d'un espace entre les trames étendu moins une période d'un espace entre les trames distribué.

4. Procédé selon la revendication 1, comprenant :
l'utilisation d'une usurpation d'entête de procédure de convergence de couche physique, en vue de transmettre le paramètre de durée modifié.

5. Procédé selon la revendication 1, comprenant :
l'ajustement d'un point temporel de détermination d'échec de code de redondance cyclique associé audit au moins un paquet.

6. Procédé selon la revendication 1, comprenant :
l'évitement d'une iniquité en matière d'accès au support entre le dispositif hérité et le dispositif haut débit (284).

7. Procédé selon la revendication 1, comprenant :
la définition du paramètre de durée modifié, en modifiant au moins l'un d'un champ de longueur et d'un champ de débit.

8. Procédé selon la revendication 1, comprenant :
le formatage dudit au moins un paquet selon une norme 802-11 de l'Institut des ingénieurs électriciens et électroniciens.

9. Procédé selon la revendication 1, comprenant en outre :
la mise en oeuvre d'une procédure de repli pour l'évitement d'une collision lors d'un accès multiple de détection de porteuse.

10. Support de stockage mis en oeuvre par ordinateur, sur lequel des instructions sont stockées, dans lequel lorsque lesdites instructions sont exécutées, une machine met en oeuvre les étapes de procédé ci-dessous :
la transmission, dans un réseau de génération mixte (238) comprenant un dispositif hérité (244) fonctionnant selon un protocole 802.11 de l'Institut des ingénieurs électriciens et électroniciens, d'au moins un paquet (252) au dispositif hérité (244), dans lequel ledit au moins un paquet (252) comprend un paramètre de durée modifié ; **caractérisé en ce que**
ledit réseau (238) inclut un dispositif à haut débit (284) fonctionnant selon un protocole 802.11TGn de l'Institut des ingénieurs électriciens et électroniciens ; et
dans lequel le paramètre de durée modifié est associé à une pluralité de paquets à haut débit transmis séquentiellement (165).

11. Support de stockage selon la revendication 10, dans lequel le paramètre de durée modifié est choisi de manière à éviter une iniquité en matière d'accès au support entre le dispositif hérité et le dispositif à haut débit (284).

12. Support de stockage selon la revendication 10, dans lequel ledit au moins un paquet (252) comprend un en-tête de procédure de convergence de couche physique.

13. Dispositif, comprenant :
un élément de traitement (228) pour transmettre, dans un réseau de génération mixte (238) comprenant un dispositif hérité (244) fonctionnant selon un protocole 802.11 de l'Institut des ingénieurs électriciens et électroniciens, au moins un paquet (252) au dispositif hérité (244), dans lequel ledit au moins un paquet (252) comprend un paramètre de durée modifié ; **caractérisé en ce que**
ledit réseau (238) inclut un dispositif à haut débit (284) fonctionnant selon un protocole 802.11TGn de l'Institut des ingénieurs électriciens et électroniciens ; et
dans lequel une valeur du paramètre de durée modifié est inférieure à une première durée (272) dudit au moins un paquet (252).

14. Dispositif selon la revendication 13, dans lequel le paramètre de durée modifié est défini sur une valeur de la première durée dudit au moins un paquet (252), à laquelle est déduite une période d'un espace entre les trames étendu moins une période d'un espace entre les trames distribué.

15. Dispositif selon la revendication 13, dans lequel le paramètre de durée modifié est transmis en utilisant des valeurs de longueur et de débit incluses dans un en-tête de couche physique compatible avec les systèmes hérités.
